# EUROPÄISCHE PATENTSCHRIFT

(11) **EP 2 825 870 B1**
(45) Veröffentlichungstag und Bekanntmachung des Hinweises auf die Patenterteilung: **20.04.2016**
(21) Anmeldenummer: 13709155.9
(22) Anmeldetag: 14.02.2013
(51) Int. Cl.: G01N 25/72

(54) **VERFAHREN UND VORRICHTUNG ZUR THERMOGRAPHISCHEN OBERFLÄCHENINSPEKTION VON METALLURGISCHEN GIESSPRODUKTEN IN EINER PRODUKTIONSLINIE**
METHOD AND APPARATUS FOR THE THERMOGRAPHIC INSPECTION OF THE SURFACE OF PRODUCTS FROM A METAL CASTING PRODUCTION LINE
PROCÉDÉ ET DISPOSITIF DE CONTRÔLE THERMOGRAPHIQUE DE LA SURFACE DE PRODUITS MÉTALLURGIQUES COULÉS DANS UNE LIGNE DE PRODUCTION

(30) Priorität: 14.03.2012 DE 102012203969; 16.04.2012 DE 102012206221
(43) Veröffentlichungstag der Anmeldung: 21.01.2015
(73) Patentinhaber: SMS group GmbH, 40237 Düsseldorf (DE)
(72) Erfinder: SCHULZE, Stephan, 40668 Meerbusch (DE); GUSAROVA, Tamara, 41812 Erkelenz (DE)
(74) Vertreter: Klüppel, Walter
(86) Internationale Anmeldenummer: PCT/EP2013/052983
(87) Internationale Veröffentlichungsnummer: WO 2013/135453

(56) Entgegenhaltungen:
- EP-A1- 0 056 215
- EP-A1- 1 457 777
- EP-A2- 0 105 401
- WO-A1-01/96040
- WO-A2-2012/019213
- DE-A1- 2 707 123
- US-A- 4 219 844

## Beschreibung

### Technisches Gebiet

Die vorliegende Erfindung betrifft ein Verfahren zur Inspektion von metallurgischen Gießprodukten in einer Produktionslinie bevorzugt zur Inspektion bezüglich Oberflächenfehlern und oberflächennahen Fehlern. Die vorliegende Erfindung betrifft weiterhin eine Vorrichtung zur Inspektion von metallurischen Gießprodukten in der Produktionslinie.

### Stand der Technik

Beim Gießen von Stahl kommt der Oberflächeninspektion nach dem Gießvorgang eine große Bedeutung zu, um festzustellen, ob die Oberflächengüte des Gießproduktes auf dem gewünschten und geforderten Niveau liegt.

Insbesondere bei der Herstellung von hochanspruchsvollen und rissanfälligen Stahlsorten, beispielsweise mikrolegierten Baustählen, ist es notwendig, die Prozessparameter des Gießvorgangs, wie beispielsweise die Gießgeschwindigkeit und die Kühlung optimal einzustellen, um eine mögliche Rissbildung des Gießproduktes zu reduzieren beziehungsweise zu verhindern. Das Gießen ist der erste Schritt des Produkts zum Endprodukt hin, somit ist es besonders wichtig die hohe Oberflächenqualität des Gießproduktes zu gewährleisten.

Die Inspektion der Oberflächengüte des hergestellten Gießproduktes wird bisher typischerweise erst nach einer vollständigen Abkühlung des Produktes, also nach ca. 2 bis 4 Tagen, manuell durchgeführt. Zu diesem Zeitpunkt ist ein Eingriff in die Prozessparameter des Gießprozesses nicht mehr möglich und eine Nachbehandlung des Gießproduktes aufwändig. Um die manuelle Inspektion durchführen zu können, ist auch eine Oberflächenbearbeitung notwendig, um beispielsweise die ausgebildete Zunderschicht zu entfernen, damit ein Kontrast der jeweiligen Defekte bezüglich der übrigen Oberfläche so ausgebildet werden kann, dass der jeweilige Defekt bei der manuellen Inspektion gefunden werden kann. Die bei dieser manuellen Inspektion gefundenen Oberflächenfehler werden nachfolgend geflämmt. Diese Prozedur ist aufwändig und zeitintensiv.

Im Bereich mikrolegierter Baustähle ist es aufgrund deren Erstarrungs- und Ausscheidungsverhalten häufig der Fall, dass Oberflächenrisse in dem Gießprodukt entstehen. Daher wird die gesamte Produktion dieser Stähle typischerweise nach dem Gießen ohne den Aufwand einer manuellen Inspektion zu betreiben einem Kantenflämmen unterzogen, wobei jedoch wesentliche Materialverluste von bis zu 2 bis 3% entstehen. Nach dem Kantenflämmen stehen dann keine weiteren Informationen über möglicherweise vorhandene Oberflächenfehler zur Verfügung, welche für die weitere Prozessoptimierung des Gießprozesses verwendet werden könnten.

Es ist weiterhin bekannt, halbautomatische oder automatisierte Oberflächeninspektionen an Gießprodukten durchzuführen. Hierzu wurden unter anderem optische Messverfahren vorgeschlagen, bei welchen beispielsweise über eine CCD-Kamera die gesamte Fläche unter Verwendung einer zusätzlichen Beleuchtung aufgenommen wird und daraus die Oberflächendefekte ermittelt werden. Zu den optischen Verfahren einer berührungslosen Oberflächeninspektion zählt auch konoskopische Holografie.

Ein weiteres Verfahren ist ein so genanntes heißes Wirbelstromverfahren, welches beispielsweise aus der US 5,853,634 bekannt ist.

Weiterhin werden zur Oberflächeninspektion Laser-EMAT-Verfahren verwendet, bei welchen ein gepulster Laser Ultraschallwellen im Material erzeugt, welche mit einem elektromagnetischen akustischen Umwandler (Electro Magnetic Acoustic Transducer - EMAT) aufgenommen und dann analysiert werden.

Die Wirbelstromverfahren und die Laser-EMAT-Verfahren sind sehr aufwändig bezüglich der Unterbringung der Messsensoren in unmittelbarer Nähe (2 - 3 mm) zu den heißen gegossenen Oberflächen. Die optischen Verfahren liefern üblicherweise laterale Auflösungen von nicht weniger als 0,2 mm, eignen sich also nicht für die Detektion von sehr feinen Oberflächenfehlern.

Ein Oberflächeninspektionssystem für ein heißstrahlendes Material ist beispielsweise in der US 4,319,270 beschrieben. Ein weiteres optisches Verfahren ist aus der DE 27 07 123 A1 bekannt.

### Darstellung der Erfindung

Es ist daher eine Aufgabe der vorliegenden Erfindung, ein Verfahren und eine Vorrichtung zur Oberflächeninspektion von Gießprodukten in der Produktionslinie anzugeben, mittels welchem die Inspektion weiter verbessert werden kann.

Diese Aufgabe wird durch ein Verfahren mit den Merkmalen des Anspruchs 1 gelöst. Vorteilhafte Ausbildungen des Verfahrens sind in den Unteransprüchen angegeben.

Entsprechend umfasst das Verfahren zur Inspektion von metallurgischen Gießprodukten in der Produktionslinie die Schritte Aufnehmen einer thermografischen Abbildung mindestens einer Teilfläche des Gießproduktes, und Auswerten der thermografischen Abbildung bezüglich des Vorliegens von Oberflächendefekten und/oder oberflächennahen Defekten.

Dadurch, dass eine thermografische Abbildung mindestens einer Teilfläche des Gießproduktes aufgenommen wird, kann in diesem Teilbereich zuverlässig eine Detektion von Oberflächendefekten vorgenommen werden. Die hohe laterale und thermische Auflösung von thermographischen Aufnahmen ermöglicht entsprechend eine genaue Auswertung der Oberfläche des Gießproduktes auf die Ausbildung von Oberflächendefekten und/oder oberflächennahen Defekten hin.

Die Defekte haben im Vergleich zur fehlerfreien Oberfläche ein anderes Wärmeabbild, zum Beispiel erzeugen offene Risse eine höhere Strahlung und sind somit in den thermografischen Aufnahmen als hellere Zonen sichtbar. Über die Bestimmung des Temperaturgradienten in den thermographischen Aufnahmen kann auf die jeweilige Tiefe des Risses geschlossen werden.

Weiterhin können aus einem Zusammenhang zwischen den Inspektionsergebnissen und den Prozessparametern weitere Kenntnisse bezüglich des Gesamtprozesses gewonnen werden.

Hieraus folgt, dass die Qualität und Produktivität erhöht werden können und die Produktionskosten gesenkt werden können, beispielsweise dadurch, dass durch einen unmittelbar möglichen Eingriff in den Produktionsprozess eine zeitige Qualitätsverbesserung realisiert wird und dadurch Zeit und Aufwand der Nachbesserungsarbeiten, wie das Flämmen etc., gespart werden können.

Die thermographische Aufnahme des Gießproduktes findet dabei bevorzugt im heißen Zustand des Gießproduktes statt, besonders bevorzugt an einem Gießprodukt mit einer Temperatur über 700°C. Es wird eine passive thermographische Aufnahme gemacht, bei der das Gießprodukt ohne Zufuhr von zusätzlicher Energie thermographisch aufgenommen wird.

Eine effiziente Ausführung des Verfahrens ergibt sich, wenn die thermografische Abbildung während des Gießens des Gießproduktes online in der Produktionslinie aufgenommen wird. Auf diese Weise ergibt sich auch eine kurze Rückkopplung an den Gießprozess, so dass bei einem Auftreten übermäßig vieler oder großer Oberflächendefekte ein direkter Eingriff in die Prozessparameter des Gießprozesses vorgenommen werden kann. Entsprechend ergeben sich sehr unmittelbare Steuer- und Regelungsmöglichkeiten, welche einen direkten Eingriff in die Parameter des Gießvorganges ermöglichen.

Die thermografische Abbildung wird ausschließlich mit einer Thermographiekamera aufgenommen, bevorzugt im mittelwelligen oder langwelligen Infrarotbereich, wo eine höhere Empfindlichkeit der Aufnahmen bezüglich der Änderung der Emissionskoeffizienten besteht. Die thermographische Abbildung hat gegenüber den konventionell verwendeten Verfahren, welche üblicherweise auch oder ausschließlich im optischen Spektralbereich, also im sichtbaren VIS-Spektralbereich (400 bis 800 nm) arbeiten, den Vorteil, dass eine Temperaturgradientenmessung durchgeführt werden kann. Dies ist bei der VIS Messung nicht möglich, sondern es können lediglich über die Helligkeitsunterschiede die Positionen der Defekte festgestellt werden.

Bei der Verwendung von Infrarotstrahlung als detektiertes Signal kann zum anderen eine erhöhte Empfindlichkeit und laterale Auflösung erreicht werden, da sich die Infrarotstrahlung um den Riss herum ausbreitet beziehungsweise gestreut wird. Hierdurch wird es möglich, auch Risse zu detektieren, welche eigentlich unter der lateralen Auflösungsgrenze des entsprechenden Sensors beziehungsweise Detektors liegen. So ist es beispielsweise möglich, Risse mit einer Breite von unter 0,1 mm bei einer Auflösung der Thermokamera von 0,4 mm pro Pixel zu detektieren.

Bewegungsunschärfen bei der thermographischen Aufnahme können durch verschiedene Maßnahmen vermieden werden. Beispielsweise kann die Thermografiekamera während der thermographischen Aufnahme synchron mit dem Gießprodukt bewegt werden und bevorzugt nach Abschluss der Aufnahme der thermografischen Abbildung entgegen der Produktionsrichtung zurück in eine Ausgangsposition zur erneuten Aufnahme einer thermographischen Abbildung bewegt werden. Eine Bewegung in Querrichtung ist ebenfalls möglich. Eine andere Lösung könnte zum Beispiel eine Aufnahme der bewegten Oberfläche über die Bewegung eines Spiegels bei einer fest positionierten Thermographiekamera sein.
Die Oberflächenbewegung könnte auch über kurze Belichtungszeiten und/oder eine Blende und/oder in Software kompensiert werden.

Die Qualität der thermographischen Abbildung kann verbessert werden, indem vor der Aufnahme der thermografischen Abbildung eine Oberflächenbehandlung des Gießprodukts durchgeführt wird, bevorzugt durch Entzundern der Oberfläche mittels Wasser und/oder Pressluft und/oder ein Abbürsten der Oberfläche.

Eine weitere Möglichkeit zur Verbesserung der Qualität der thermographischen Abbildung kann erreicht werden, wenn das Gießprodukt im Bereich des Aufnahmefensters der thermographischen Aufnahme mit Luft überspült wird, bevorzugt mit einem im Wesentlichen laminaren Strom kalter Luft. Auf diese Weise können Schlieren infolge von Heißluftbewegung verringert beziehungsweise eliminiert werden.

Bevorzugt wird die Auswertung der thermografischen Abbildung bezüglich des Vorliegens von Oberflächendefekten und/oder oberflächennahen Defekten automatisch durchgeführt, bevorzugt mittels einer automatischen Bildverarbeitung. Dabei ist es von besonderem Vorteil, wenn aus Position, Ausdehnung und Gradienten von Intensitätsschwankungen in der thermographischen Abbildung auf die Position, Größe und Tiefe von Oberflächendefekten und/oder oberflächennahen Defekten geschlossen wird.

Eine vereinfachte Handhabung des Gießproduktes ergibt sich, wenn detektierte Oberflächendefekte und/oder oberflächennahe Defekte auf der Oberfläche des Gießproduktes markiert werden. Diese markierten Defekte können dann entsprechend nachbehandelt werden.

Von besonderem Vorteil ist eine direkte Fehlerausbesserung, wie zum Beispiel durch Flämmen, nach oder anstatt der Fehlermarkierung.

In einer besonders bevorzugten Weiterbildung des Verfahrens geht die Auswertung der thermographischen Abbildung als Steuergröße und/oder Regelgröße in den Produktionsprozess des Gießproduktes ein und bevorzugt werden die Anzahl, Größe und/oder Tiefe der Oberflächendefekte und/oder oberflächennahen Defekte zur Steuerung und/oder Regelung der Gießgeschwindigkeit und/oder der Kühlung und/oder anderer Prozessparameter verwendet.

Die oben angegebene Aufgabe wird weiterhin durch eine Vorrichtung mit den Merkmalen des Anspruchs 13 gelöst. Vorteilhafte Weiterbildungen ergeben sich aus den Unteransprüchen.

Entsprechend umfasst die Vorrichtung zur Inspektion von metallurgischen Gießprodukten in der Produktionslinie eine Thermografiekamera, welche derart angeordnet ist, dass mit ihr eine thermographische Abbildung mindestens einer Teilfläche eines Gießproduktes aufnehmbar ist. Weiterhin umfasst sie eine Auswertungsvorrichtung zum Auswerten der thermografischen Abbildung bezüglich des Vorliegens von Oberflächendefekten und/oder oberflächennahen Defekten.

Bevorzugt ist die Thermografiekamera an einer Haltevorrichtung so gehalten, dass sie oberflächenstationär mit einem Gießprodukt entlang der Produktionsrichtung bewegbar ist. Auf diese Weise kann eine Bewegungsunschärfe bei der thermographischen Aufnahme verringert oder vermieden werden. Zum gleichen Zweck kann die Bewegung durch einen Spiegel anstatt der Thermographiekamera ermöglicht werden und/oder die Oberflächenbewegung durch andere Maßnahmen, wie kurze Belichtungszeiten und/oder eine Blende und/oder mit Hilfe von Software, kompensiert werden.

Eine Schlierenbildung kann vermieden oder verringert werden durch das Vorsehen einer Abblasvorrichtung, mittels welcher das Gießprodukt mit Luft im Bereich des Aufnahmefensters der Thermografiekamera überspülbar ist, bevorzugt mit einem im Wesentlichen laminaren Strom kalter Luft.

Die thermographischen Aufnahmen werden bevorzugt in einem ausreichenden Abstand zu der heißen Oberfläche des Gießprodukts gemacht, damit eine Beeinträchtigung der Messapparatur vermieden wird. Dieser notwendige Abstand kann durch geeignete Wahl der Optiken erreicht werden.

Die Thermokamera sowie weitere Elemente werden bevorzugt gekühlt, um eine unerwünschte Beeinflussung aufgrund der heißen Umgebung zu vermeiden.

### Kurze Beschreibung der Figuren

Bevorzugte weitere Ausführungsformen und Aspekte der vorliegenden Erfindung werden durch die nachfolgende Beschreibung der Figur näher erläutert.

### Dabei zeigt

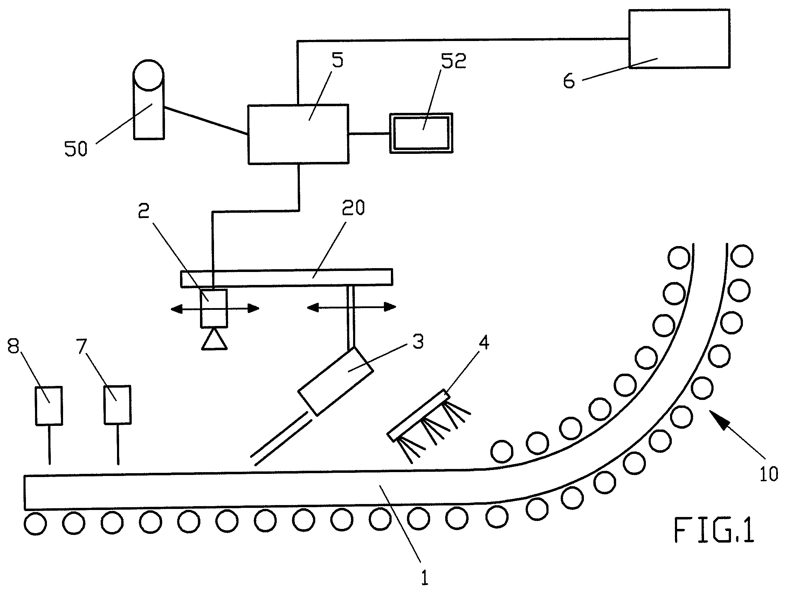

- Figur 1: schematisch eine Vorrichtung zum Aufnehmen einer thermografischen Abbildung zur Oberflächeninspektion.

### Detaillierte Beschreibung bevorzugter Ausführungsbeispiele

Im Folgenden werden bevorzugte Ausführungsbeispiele anhand der Figur beschrieben.

In Figur 1 ist ein Gießprodukt 1 in Form einer Bramme, welche in einem Gießbogen 10 gegossen wird, gezeigt. Das Gießprodukt 1 wird im Wesentlichen unmittelbar nachdem es den Gießbogen 10 verlassen hat im noch heißen Zustand einer Oberflächeninspektion unterzogen. Bevorzugend wird die Inspektionsvorrichtung direkt hinter dem Rissentstehungsort, zum Beispiel nach dem Richtsegment beim Stranggießen, positioniert. Die Oberflächeninspektion wird entsprechend nach dem Gießen des Gießproduktes 1 in der Produktionslinie durchgeführt.

Für die Oberflächeninspektion ist eine Thermographiekamera 2 über der Oberfläche des Gießproduktes 1 vorgesehen. Die Thermographiekamera 2 ist dabei so weit von der Oberfläche des Gießproduktes beabstandet, dass zumindest ein Teilbereich der Oberfläche des Gießproduktes 1 aufgenommen werden kann und bevorzugt eine thermographische Aufnahme über die gesamte Breite des Gießproduktes 1 hinweg vorgenommen werden kann. Der Abstand ist typischer Weise größer als 0,5m, um gleichzeitig auch die thermische Belastung der Thermographiekamera 2 zu verringern.

Die thermografische Kamera 2 ist an einer entsprechenden Aufhängung 20 befestigt, welche es ermöglicht, die Thermographiekamera 2 entlang der Produktionsrichtung zu bewegen. In der hier gezeigten Ausführungsform wird die Thermographiekamera 2 dabei zunächst synchron zur Bewegung des Gießprodukts 1 mitgeführt, also quasi oberflächenstationär bezüglich des Gießproduktes 1 bewegt, um in dieser Zeit eine thermografische Abbildung aufzunehmen. Nach Aufnahme der entsprechenden Abbildung wird die thermografische Kamera 2 an der Aufhängung 20 wieder entgegen der Produktionsrichtung zurückgeführt, so dass sie einen neuen Abschnitt des Gießproduktes 1 erfassen kann, mit welchem sie dann erneut synchron mitgeführt wird. Auf diese Weise kann eine Bewegungsunschärfe in der thermographischen Abbildung reduziert oder gar ganz vermieden werden.

In einer nicht gezeigten Alternative ist die Thermographiekamera 2 fest oberhalb des Gießproduktes 1 angeordnet und nimmt von dieser Position aus die entsprechende Thermografieabbildung auf. Eine mögliche Bewegungsunschärfe kann entweder durch Aufnehmen der Thermographiebilder über einen beweglichen Spiegel oder durch kurze Belichtungszeiten, eine Blende vor dem Objektiv, oder eine entsprechende Software eliminiert werden, welche die Produktvorschubgeschwindigkeit berücksichtigen.

Eine Schlierenbildung aufgrund einer Heißluftbewegung auf dem Gießprodukt 1 wird durch das Bereitstellen einer Abblasvorrichtung 3 vermindert beziehungsweise eliminiert. Die Abblasvorrichtung 3 bläst kalte Luft in einem möglichst laminaren Luftstrom über das heiße Gießprodukt 1 hinweg. Der Luftstrom wird bevorzugt unterhalb der Thermographiekamera 2 auf dem Gießprodukt 1 geführt, so dass das Sichtfenster der Thermographiekamera 2 im Wesentlichen ohne Heißluftbewegung und entsprechend mit reduzierter Schlierenbildung in der Abbildung vorgesehen ist.

In dem in Figur 1 gezeigten Ausführungsbeispiel wird die Abblasvorrichtung 3 synchronisiert mit der Thermographiekamera 2 bewegt, um stets ein definiertes Verhältnis bereitzustellen.

In einer alternativen Ausführungsform kann die Abblasvorrichtung 3 jedoch auch stationär angeordnet sein.

Eine Oberflächenvorbehandlung in Form einer Entzunderung wird mit einem Zunderwäscher 4 vor der Aufnahme der Thermografieabbildung durchgeführt. Der Zunderwäscher 4 entfernt Zunder von der Oberfläche des Gießproduktes 1 derart, dass die Thermographiekamera 2 eine thermografische Abbildung des Gießproduktes 1 aufnehmen kann.

Die von der Thermographiekamera 2 aufgenommene thermografische Abbildung wird einer Auswertungsvorrichtung 5 zugeführt, in welcher auf Grundlage der thermographischen Abbildung eine Analyse der Oberfläche des Gießproduktes 1 durchgeführt wird. Da Risse beziehungsweise andere Defekte in dem Gießprodukt 1 ein anderes Wärmeabbild erzeugen, als die fehlerfreie Oberfläche, können die Defekte anhand der Intensitätsunterschiede in der thermografischen Abbildung erkannt werden. Der jeweils gemessene Temperaturgradient kann dabei auch Hinweise auf die Tiefe des jeweiligen Risses geben. In der Auswertungsvorrichtung 5 werden die Position sowie die Größe des jeweiligen Risses beziehungsweise Defektes bestimmt. Über die Messung des Temperaturgradienten kann weiterhin eine Tiefe des jeweiligen Defekts abgeschätzt werden.

Die von der Auswertungsvorrichtung 5 ermittelten Daten bezüglich der Position, Größe und Tiefe der jeweiligen Defekte werden zum einen in einer Datenbank 50 protokolliert und zum anderen an einen entsprechenden Anlagenbediener über eine Anzeige 52 ausgegeben.

Die ermittelten Daten können weiterhin direkt einem Prozessrechner 6, welcher zur Steuerung des eigentlichen Gießprozesses dient, zugeführt werden, so dass Eingriffe in den Gießprozess durchgeführt werden können. In einer bevorzugten Ausführung wird der Gießprozess auch aufgrund des gefundenen Defektbefundes in dem Gießprodukt 1 geregelt und/oder gesteuert.

Eine Markierungsvorrichtung 7, wie beispielsweise ein Farbaufträger ist vorgesehen, um die jeweiligen Defekte auf dem Gießprodukt 1 zu markieren.

Desweiteren kann vorzugsweise in Gießrichtung unmittelbar hinter der thermographischen Oberflächeninspektion eine Vorrichtung zur Fehlerausbesserung, wie beispielsweise eine Flämmvorrichtung, in die Produktionslinie integriert werden.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Gießprodukt
- 10: Gießbogen
- 2: Thermographiekamera
- 20: Halterung zum Verfahren der Thermographiekamera
- 3: Abblasvorrichtung
- 4: Zunderwäscher
- 5: Auswertungsvorrichtung
- 50: Protokollierungsdatenbank
- 52: Anzeige
- 6: Prozesssteuerung des Gießvorganges
- 7: Markierungsvorrichtung
- 8: Fehlerausbesserungsvorrichtung

## Patentansprüche

1. Verfahren zur Inspektion von metallurgischen Gießprodukten (1) in einer Produktionslinie, umfassend die Schritte
- Aufnehmen einer thermografischen Abbildung mindestens einer Teilfläche des Gießproduktes (1); und
- Auswerten der thermografischen Abbildung bezüglich des Vorliegens von Oberflächendefekten und/oder oberflächennahen Defekten,
wobei die thermographische Aufnahme mittels einer Thermographiekamera (2) durchgeführt wird und die Thermographiekamera (2) während der thermographischen Aufnahme synchron mit dem Gießprodukt bewegt wird und bevorzugt nach Abschluss der Aufnahme der thermografischen Abbildung entgegen der Produktionsrichtung zurück in eine Ausgangsposition zur erneuten Aufnahme einer thermographischen Abbildung bewegt wird.

2. Verfahren zur Inspektion von metallurgischen Gießprodukten (1) in einer Produktionslinie, umfassend die Schritte
- Aufnehmen einer thermografischen Abbildung mindestens einer Teilfläche des Gießproduktes (1); und
- Auswerten der thermografischen Abbildung bezüglich des Vorliegens von Oberflächendefekten und/oder oberflächennahen Defekten.
wobei die thermographischen Aufnahmen mittels einer Thermographiekamera (2) aufgenommen werden und die thermographischen Aufnahmen über einen synchron mit dem Gießprodukt bewegten Spiegel bei einer fest installierten Thermographiekamera gemacht werden.

3. Verfahren gemäß Anspruch 1, wobei die thermografische Abbildung an einem heißen Gießprodukt aufgenommen wird, bevorzugt an einem Gießproduktes mit einer Temperatur über 700°C.

4. Verfahren gemäß einem der vorstehenden Ansprüche, wobei die thermographische Abbildung mittels passiver Thermographie aufgenommen wird.

5. Verfahren gemäß einem der vorstehenden Ansprüche, wobei die thermografische Abbildung ausschließlich im Infrarotbereich aufgenommen wird, bevorzugt Im mittelwelligen oder langwelligen Infrarotbereich, besonders bevorzugt in einem Bereich ab 5 µm.

6. Verfahren gemäß einem der vorstehenden Ansprüche, wobei die thermographischen Aufnahmen mittels einer Thermographiekamera (2) aufgenommen werden und die Bewegung des Gießproduktes durch kurze Belichtungszeiten und/oder durch eine Blende und/oder durch Software kompensiert wird.

7. Verfahren gemäß einem der vorstehenden Ansprüche, wobei vor Aufnahme der thermografischen Abbildung eine Oberflächenbehandlung des Gießprodukts (1) durchgeführt wird, bevorzugt durch Entzundern der Oberfläche mittels Wasser und/oder Pressluft und/oder ein Abbürsten der Oberfläche durchgeführt wird.

8. Verfahren gemäß einem der vorstehenden Ansprüche, wobei das Gleßprodukt (1) im Bereich des Aufnahmefensters der thermographischen Aufnahme mit Luft überspült wird, bevorzugt mit einem im Wesentlichen laminaren Strom kalter Luft.

9. Verfahren gemäß einem der vorstehenden Ansprüche, wobei die Auswertung der thermografischen Abbildung bezüglich des Vorliegens von Oberflächendefekten und/oder oberflächennahen Defekten automatisch durchgeführt wird, bevorzugt mittels einer automatischen Bildverarbeitung.

10. Verfahren gemäß Anspruch 9, wobei aus Position, Ausdehnung und Gradienten von Intensitätsschwankungen In der thermographischen Abbildung auf die Position, Größe und Tiefe von Oberflächendefekten und/oder oberflächennahen Defekten geschlossen wird

11. Verfahren gemäß einem der vorstehenden Ansprüche, wobei detektierte Oberflächendefekte und/oder oberflächennahe Defekte auf der Oberfläche des Gießproduktes markiert werden.

12. Verfahren gemäß einem der vorstehenden Ansprüche, wobei detektierte Oberflächendefekte und/oder oberflächennahe Defekte von der Oberfläche des Gießprodukte sofort nach Ihrer Detektion in der Produktionslinie entfernt werden.

13. Verfahren gemäß einem der vorstehenden Ansprüche, wobei die Auswertung der thermographischen Abbildung als Steuergröße und/oder Regelgröße in den Produktionsprozess des Gießproduktes eingeht und bevorzugt die Anzahl, Größe und/oder Tiefe der Oberflächendefekte und/oder oberflächennahen Defekte zur Steuerung und/oder Regelung der Gießgeschwindigkeit und/oder Kühlung und/oder andere Prozessparameter verwendet werden.

14. Vorrichtung zur Inspektion von Gießprodukten (1) in einem Stahlwerk, umfassend eine Aufhängung (20) und eine Thermographiekamera (2), welche derart an der Aufhängung (20) befestigt ist, dass mit ihr eine thermographische Abbildung mindestens einer Teilfläche eines Gießproduktes (1) aufnehmbar ist, und eine Auswertungsvorrichtung (5) zum Auswerten der thermografischen Abbildung bezüglich des Vorliegens von Oberflächendefekten und/oder oberflächennahen Defekten, wobei die Aufhängung (20) eingerichtet ist, um während der thermografischen Aufnahme die Thermographiekamera (2) synchron mit dem Gießprodukt zu bewegen.

15. Vorrichtung gemäß Anspruch 14, wobei die Thermographiekamera (2) im Produktionsprozess direkt nach dem Rissentstehungsort angeordnet ist.

16. Vorrichtung gemäß Anspruch 14 bis 15, wobei die Bewegung des Gießproduktes durch kurze Belichtungszelten und/oder eine Blende und/oder mit Hilfe von Software in den Aufnahmen kompensiert wird.

17. Vorrichtung gemäß einem der Ansprüche 14 bis 16, wobei eine Abblasvorrichtung (3) vorgesehen ist, mittels welcher das Gießproduktes (1) mit Luft im Bereich des Aufnahmefensters der Thermographiekamera überspülbar ist, bevorzugt mit einem Im Wesentlichen lamlnaren Strom kalter Luft.

18. Vorrichtung gemäß einem der Ansprüche 14 bis 17, wobei die Auswertungsvorrichtung (5) mit einer Steuervorrichtung (6) für den Gießprozess kommuniziert.

19. Vorrichtung gemäß einem der Ansprüche 14 bis 18, wobei eine Marklerüngsvorrichtung (7) zur Markierung von Oberflächendefekten und/oder oberflächennahen Defekten auf der Oberfläche des Gießproduktes vorgesehen ist, und die Markierungsvorrichtung (7) bevorzugt in Kommunikation mit der Auswertungsvorrichtung (5) steht.

20. Vorrichtung gemäß einem der Ansprüche 14 bis 19, wobei eine Fehlerausbesserungsvorrichtung (8) zur Entfernung von Oberflächendefekten und/oder oberflächennahen Defekten von der Oberfläche des Gießproduktes vorgesehen ist, und die Fehlerausbesserungsvorrichtung (8) bevorzugt in Kommunikation mit der Auswertungsvorrichtung (5) steht.

## Claims

1. Method for inspection of metallurgical cast products (1) in a production line, comprising the steps of:
- recording a thermographic image of at least a part area of the cast product (1); and
- evaluating the thermographic image with respect to the presence of surface defects and/or near-surface defects,
wherein the thermographic recording is carried out by means of a thermographic camera (2) and the thermographic camera (2) during the thermographic recording is moved synchronously with the cast product and preferably after conclusion of recording of the thermographic image is moved opposite to the production direction back into a starting position for fresh recording of a thermographic image.

2. Method for inspection of metallurgical cast products (1) in a production line, comprising the steps of:
- recording a thermographic image of at least a part area of the cast product (1); and
- evaluating the thermographic image with respect to the presence of surface defects and/or near-surface defects,
wherein the thermographic recordings are taken by means of a thermographic camera (2) and the thermographic recordings are made by way of a mirror, which in the case of a fixedly installed thermographic camera is moved synchronously with the cast product.

3. Method according to claim 1, wherein the thermographic image is recorded at a hot cast product, preferably at a cast product with a temperature above 700° C.

4. Method according to any one of the preceding claims, wherein the thermographic image is recorded by means of passive thermography.

5. Method according to any one of the preceding claims, wherein the thermographic image is recorded exclusively in the infrared range, preferably in the medium-wave or long-wave infrared range, particularly preferably in a range from 5 µm.

6. Method according to any one of the preceding claims, wherein the thermographic recordings are taken by means of a thermographic camera (2) and compensation for the movement of the cast product is provided by short illumination times and/or by an aperture and/or by software.

7. Method according to any one of the preceding claims, wherein prior to recording the thermographic image a surface treatment of the cast product (1) is carried out, preferably by descaling the surface by means of water and/or compressed air and/or brushing of the surface.

8. Method according to any one of the preceding claims, wherein the cast product (1) is cleaned in the region of the recording window of the thermographic recording by air, preferably by a substantially laminar flow of cold air.

9. Method according to any one of the preceding claims, wherein the evaluation of the thermographic image with respect to the presence of surface defects and/or near-surface defects is carried out automatically, preferably by means of automatic image processing.

10. Method according to claim 9, wherein a conclusion about the position, size and depth of surface defects and/or defects near the surface is made from the position, extent and gradient of fluctuations in intensity in the thermographic image.

11. Method according to any one of the preceding claims, wherein detected surface defects and/or near-surface defects are marked on the surface of the cast product.

12. Method according to any one of the preceding claims, wherein detected surface defects and/or near-surface defects are removed, immediately after detection thereof, from the surface of the cast product in the production line.

13. Method according to any one of the preceding claims, wherein the evaluation of the thermographic image is included as a control variable and/or regulating variable in the production process of the cast product and use is preferably made of the number, size and/or depth of the surface defects and/or near-surface defects for control and/or regulation of the casting speed and/or cooling and/or other process parameters.

14. Device for inspection of cast products (1) in a steel works, comprising a suspension (20) and a thermographic camera (2), which is so fastened to the suspension (20) that a thermographic image can be recorded by it of at least a part surface of a cast product (1), and an evaluating device (5) for evaluating of the thermographic image with respect to the presence of surface defects and/or near-surface defects, wherein the suspension (20) is arranged to move the thermographic camera (2) synchronously with the cast product during the thermographic recording.

15. Device according to claim 14, wherein the thermographic camera (2) is arranged directly after the location where tears arise in the production process.

16. Device according to claim 14 or 15, wherein compensation for the movement of the cast product is provided by short illumination times and/or an aperture and/or with the help of software in the recording.

17. Device according to any one of claims 14 to 16, wherein a blowing device (3) is provided, by means of which the cast product (1) can be cleaned with air in the region of the recording window of the thermographic camera, preferably with a substantially laminar flow of cold air.

18. Device according to any one of claims 14 to 17, wherein the evaluating device (5) communicates with a control device (6) for the casting process.

19. Device according to any one of claims 14 to 18, wherein a marking device (7) for marking surface defects and/or near-surface defects on the surface of the cast product is provided and the marking device (7) is preferably in communication with the evaluating device (5).

20. Device according to any one of claims 14 to 19, wherein a fault correction device (8) for removal of surface defects and/or near-surface defects from the surface of the cast product is provided and the fault correction device (8) is preferably in communication with the evaluating device (5).

## Revendications

1. Procédé pour l'inspection de produits métallurgiques de coulée continue (1) dans une ligne de production, comprenant les étapes dans lesquelles :
- on enregistre une reproduction thermographique d'au moins une surface partielle du produit de coulée continue (1) ; et
- on évalue la reproduction thermographique en ce qui concerne la présence de défauts superficiels et/ou de défauts à proximité de la surface ;
dans lequel on procède à l'enregistrement thermographique au moyen d'une caméra de thermographie (2) et on déplace la caméra de thermographie (2) au cours de l'enregistrement thermographique de manière synchrone avec le produit de coulée continue, et de préférence au terme de l'enregistrement de la reproduction thermographique, on la déplace, à l'encontre de la direction de production, en retour dans une position de départ pour l'enregistrement renouvelé d'une reproduction thermographique.

2. Procédé pour l'inspection de produits métallurgiques de coulée continue (1) dans une ligne de production, comprenant les étapes dans lesquelles :
- on enregistre une reproduction thermographique d'au moins une surface partielle du produit de coulée continue (1) ; et
- on évalue la reproduction thermographique en ce qui concerne la présence de défauts superficiels et/ou de défauts à proximité de la surface ;
dans lequel on procède aux enregistrements thermographiques au moyen d'une caméra de thermographie (2) et on réalise les enregistrements thermographiques via un miroir que l'on déplace de manière synchrone avec le produit de coulée continue, la caméra de thermographie étant montée à demeure.

3. Procédé selon la revendication 1, dans lequel on enregistre la reproduction thermographique à partir d'un produit chaud de coulée continue, de préférence à partir d'un produit de coulée continue dont la température est supérieure à 700 °C.

4. Procédé selon l'une quelconque des revendications précédentes, dans lequel on enregistre la reproduction thermographique au moyen d'une thermographie passive.

5. Procédé selon l'une quelconque des revendications précédentes, dans lequel on enregistre la reproduction thermographique de manière exclusive dans le domaine infrarouge, de préférence dans le domaine infrarouge de longueur d'onde moyenne ou de grande longueur d'onde, de manière particulièrement préférée dans un domaine à partir de 5 µm.

6. Procédé selon l'une quelconque des revendications précédentes, dans lequel on enregistre les reproductions thermographiques au moyen d'une caméra de thermographie (2) et on compense le mouvement du produit de coulée continue par de brefs temps d'éclairement et/ou via un écran et/ou en utilisant un logiciel.

7. Procédé selon l'une quelconque des revendications précédentes, dans lequel, avant l'enregistrement de la reproduction thermographique, on soumet le produit de coulée continue (1) à un traitement superficiel, de préférence par décalaminage de la surface en utilisant de l'eau et/ou de l'air comprimé et/ou en procédant à un brossage de la surface.

8. Procédé selon l'une quelconque des revendications précédentes, dans lequel, le produit de coulée continue (1) est balayé avec de l'air dans la zone de la fenêtre d'enregistrement de la reproduction thermographique, de préférence avec un courant essentiellement laminaire d'air froid.

9. Procédé selon l'une quelconque des revendications précédentes, dans lequel l'évaluation de la reproduction thermographique en ce qui concerne la présence de défauts superficiels et/ou de défauts à proximité de la surface est mise en oeuvre de manière automatique, de préférence au moyen d'un traitement automatique d'images.

10. Procédé selon la revendication 9, dans lequel, à partir de la position, de l'étendue et des gradients des fluctuations d'intensité dans la reproduction thermographique, on détermine la position, la dimension et la profondeur des défauts superficiels et/ou des défauts à proximité de la surface.

11. Procédé selon l'une quelconque des revendications précédentes, dans lequel des défauts superficiels détectés et/ou des défauts détectés à proximité de la surface sont marqués sur la surface du produit de coulée continue.

12. Procédé selon l'une quelconque des revendications précédentes, dans lequel des défauts superficiels détectés et/ou des défauts détectés à proximité de la surface sont éliminés de la surface du produit de coulée continue directement après leur détection dans la ligne de production.

13. Procédé selon l'une quelconque des revendications précédentes, dans lequel on introduit l'évaluation de la reproduction thermographique, à titre de valeur de commande et/ou à titre de valeur de réglage, dans le processus de production du produit de coulée continue, et on utilise de préférence le nombre, la dimension et/ou la profondeur des défauts superficiels et/ou des défauts à proximité de la surface pour la commande et/ou pour le réglage de la vitesse de coulée continue et/ou pour le refroidissement et/ou pour d'autres paramètres opératoires.

14. Dispositif pour l'inspection de produits de coulée continue (1) dans une aciérie, comprenant une suspension (20) et une caméra de thermographie (2) qui est fixée à la suspension (20) de manière telle que l'on peut, avec elle, enregistrer une reproduction thermographique au moins d'une surface partielle d'un produit de coulée continue (1), ainsi qu'un dispositif d'évaluation (5) pour l'évaluation de la reproduction thermographique en ce qui concerne la présence de défauts superficiels et/ou de défauts à proximité de la surface,
dans lequel la suspension (20) est montée de manière à pouvoir, au cours de l'enregistrement thermographique, déplacer la caméra de thermographie (2) de manière synchrone avec le produit de coulée continue.

15. Dispositif selon la revendication 14, dans lequel la caméra de thermographie (2) est disposée dans le processus de production directement après l'endroit lié à la formation de fissures.

16. Dispositif selon l'une quelconque des revendications 14 à 15, dans lequel on compense le mouvement du produit de coulée continue par de brefs temps d'éclairement et/ou via un écran et/ou en utilisant un logiciel dans les enregistrements.

17. Dispositif selon l'une quelconque des revendications 14 à 16, dans lequel on prévoit un dispositif de soufflage (3) à l'aide duquel on peut balayer le produit de coulée continue (1) avec de l'air dans la zone de la fenêtre d'enregistrement de la caméra de thermographie, de préférence avec un courant essentiellement laminaire d'air froid.

18. Dispositif selon l'une quelconque des revendications 14 à 17, dans lequel le dispositif d'évaluation (5) est mis en communication avec un dispositif de commande (6) pour le processus de coulée continue.

19. Dispositif selon l'une quelconque des revendications 14 à 18, dans lequel on prévoit un dispositif de marquage (7) pour marquer les défauts superficiels et/ou les défauts à proximité de la surface, sur la surface du produit de coulée continue, et le dispositif de marquage (7) est de préférence mis en communication avec le dispositif dévaluation (5).

20. Dispositif selon l'une quelconque des revendications 14 à 19, dans lequel on prévoit un dispositif de réparation des défauts (8) pour éliminer les défauts superficiels et/ou les défauts à proximité de la surface, à partir de la surface du produit de coulée continue, et le dispositif de réparation des défauts (8) est de préférence mise en communication avec le dispositif dévaluation (5).
